Europäisches Patentamt

**European Patent Office**

**Office européen des brevets**

(11) Publication number: **0 290 053**
A1

## EUROPEAN PATENT APPLICATION

(21) Application number: **88107437.1**

(51) Int. Cl.4: **F16L 37/08**

(22) Date of filing: **09.05.88**

(30) Priority: **08.05.87 IT 8412887**
**04.03.88 IT 8410888**

(43) Date of publication of application:
**09.11.88 Bulletin 88/45**

(84) Designated Contracting States:
**ES GR**

(71) Applicant: **CALEDONIA S.p.A.**
**Via Conegliano, 96**
**I-31058 SUSEGANA (Treviso)(IT)**

(72) Inventor: **Zanetti, Paolo**
**Via Cesare Battisti, 9**
**I-31015 Conegliano (Treviso)(IT)**

(74) Representative: **Piovesana, Paolo**
**Corso del Popolo, 70**
**I-30172 Venezia-Mestre(IT)**

(54) Instant hose coupling.

(57) An instant hose coupling, characterised by comprising:
- a body (1) comprising an axial duct provided internally with at least one O-ring (9);
- a male element (3) axially insertable into said body (1) so that a seal is formed between its outer surface and said O-ring (9); and
- at least two engagement members (12,26) applied externally to said body (1) and each comprising an appendix (15,29) which traverses a corresponding passage (11) provided in the body and engages in a circumferential groove provided in said male element (3) on the outside of the portion which seals against said O-ring (9).

FIG.1

EP 0 290 053 A1

This invention relates to an instant hose coupling.

Known instant hose couplings generally consist of two parts which are securely fixed to the two hose ends to be connected together and are then engaged with each other in order to make this connection. One of these parts consists of a tubular or male element comprising an external circumferential groove. The other part, or body, consists of a tubular sleeve of such an inner diameter as to allow the male element to be inserted axially into it. On the sleeve there are provided two inclined grooves housing two pins which are elastically urged to partly project into the circular interior of the sleeve. In order to make the connection, the male element is inserted axially into the body of the coupling so as to elastically force the two pins apart, which on assuming their original position engage in the external circumferential groove of the male element. In this stage the two pins are prevented from moving apart by the particular inclination of the groove in which they engage, this inclination tending to keep the pins forcibly urged towards each other because of the fluid pressure in the hose and the consequent tendency of the male element to withdraw.

In order to disengage the male element, an external ring is moved axially along the body to displace the pins along the transverse grooves until they are spaced apart by a distance sufficient to allow the male element to be withdrawn.

One drawback of this type of coupling is that the engagement between each pin, which is rigid with the body, and the circumferential groove in the male element is reduced to a point contact which in time results in wear of the corresponding portion of the male element, so compromising its mechanical seal.

A further drawback is that the release operation requires the use of both hands.

A body has also been proposed comprising a plurality of balls projecting radially from the inner surface and engaging in an external circumferential groove provided in the male element. An external ring mobile axially to the body is provided which when in a determined relative axial position enables the balls to yield outwards, to allow withdrawal of the male element from its seat in the body.

However, in the same manner as the preceding, this method also has the drawbacks deriving from the need to use both hands for connection and release, and again presents a limited contact surface between the two parts of the coupling.

A further drawback is that if the insertion is made with a certain force, the balls can deform the outer surface of the male element so making this insertion more difficult with the passing of time.

Finally, a further drawback is a certain constructional complication if a valve has to be provided to hold the balls radially outwards when the male element is not inserted in the body.

The object of the invention is to obviate all these drawbacks by providing an instant hose coupling which can be operated with one hand, does not deform even under accidental impact, has a large contact surface on insertion, provides very reliable mechanical connection and is of very simple contruction.

This and further objects which will be apparent from the description given hereinafter are attained according to the invention by an instant hose coupling, characterised by comprising:
- a body comprising an axial duct provided internally with at least one O-ring;
- a male element axially insertable into said body so that a seal is formed between its outer surface and said O-ring; and
- at least two engagement members applied externally to said body and each comprising an appendix which traverses a corresponding passage provided in the body and engages in a circumferential groove provided in said male element on the outside of the portion which seals against said O-ring.

A preferred embodiment of the present invention is described in detail hereinafter with reference to the accompanying drawings in which:

Figure 1 is a longitudinal section through the two parts of the coupling according to the invention in their separated state;

Figure 2 shows them in their locked-together state in the same view as Figure 1 but in a reduced scale;

Figure 3 is a diagrammatic front view of the two engagement members, and

Figure 4 shows two part of the coupling in a second embodiment.

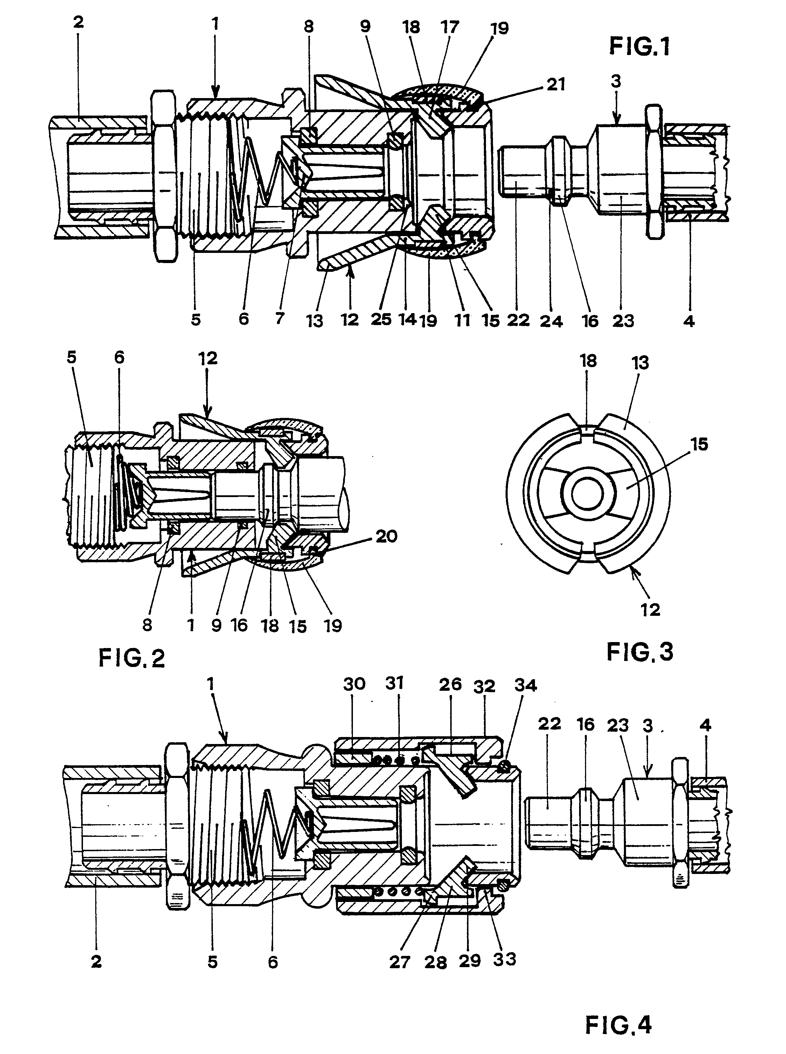

As can be seen from the figures 1 to 3 the coupling according to the invention consists essentially of two parts, namely a body 1, to which one of the two hoses 2 to be connected together is fixed in the conventional manner, and a male element 3, to which the other hose 4 is fixed.

The body 1 consists substantially of a sleeve constructed preferably of brass or aluminium and having an internally threaded end into which a union 5 directly connected to the hose 2 can be screwed so that its end provides an annular abutment surface for a conical spring 6 associated with a valve 7. The purpose of the valve 7, which is preferably of Zn-Al-Mg alloy, is to keep the internal duct of the body 1 closed when the male element 3 is not inserted.

Two annular seats are provided in the inner tubular duct of the body 1 for housing two O-rings 8 and 9 which seal respectively against the valve 7 when the male element is not inserted, and against the male element 3 when inserted into the body 1.

In proximity to its opposite end the body 1 is provided with a pair of passages 11, the outer circumferential surface of which is conical, and which communicate with the inner cavity of the body.

Two locking members are applied to said passages 11, they being indicated overall by 12 and comprising an outwardly diverging conical control lever 13, a cylindrical portion 14 which rests on the body 1 and an appendix 15 for engaging the male element 3.

Figure 3 shows the configuration of the two engagement members 12 in the shape of a circular arc, and Figures 1 and 2 show the longitudinal profile of each appendix 15 which on the side facing the hose 2 has a taper corresponding to that provided on a circumferential projection 16 of the male element 3, whereas on the side facing the hose 4 it has a taper 17 corresponding to that of the outer circumferential surface of the passages 11.

The two engagement members 12, which are also preferably of Zn-Al-Mg alloy construction, are maintained elastically in their correct working position, indicated in Figures 1 and 2, by the presence of a ring 18 housed in corresponding seats provided in said elements and preferably of synthetic rubber to which suitable substances for increasing its resistance to ozone, light and tearing have been added.

A rubber ring 19, provided with an internal circumferential rib 20 engaging in a corresponding groove 21 provided in the body 1, completely encircles the ring 18 and protects it from UV rays or any other factor which with the passing of the time can cause its deterioration.

The male element 3, also preferably of brass or aluminium construction, comprises two cylindrical portions, namely a front portion 22 of diameter just less than the inner diameter of the body 1 to enable it to be inserted into this latter, and a rear portion 23 of greater diameter equal to the inner diameter of the mouth portion of the body 1.

The circumferential projection 16 is provided in the front portion 22 and has its front annular surface 24 tapering to correspond to the taper of a flared portion 25 provided in the front surface of the inner duct of the body 1, in proximity to the O-ring 9.

The operation of the coupling according to the invention is as follows:
when the male element is not inserted (see Figure 1) the spring 6 urges the valve 7 against the O-ring 8 to keep the inner duct of the body 1 closed. At the same time the appendices 15 of the two engagement members 12 are housed in the corresponding passages 11 and partly project into the cylindrical cavity present in the mouth portion of the body 1.

To fix the male element 3 into the body 1 it is necessary only to push it axially into said body: initially the front end of the portion 22 rests against the two appendices 15 of the engagement members 12, and because of the presence of their two conical surfaces, it spaces them apart by a distance sufficient for the passage of the projection 16. This spacing is accompanied by the elastic yielding of the ring 18 and the rotation of the two engagement members 12 about the connection edge between the levers 13 and the corresponding cylindrical rest portion 14.

After the projection 16 of the front portion 22 of the male element 3 has passed beyond the two appendices 15 of the engagement members 12, the elastic return of the ring 18 causes said appendices 15 to engage in the circumferential groove in the male element 3 provided between the projection 16 and rear portion 23, so securely locking the male element to the body 1.

In this state, as can be seen from Figure 2, the front end of the portion 22 keeps the valve 17 open against the elastic reaction of the spring 6, and the O-ring 9 adheres to the cylindrical surface of the portion 22, to provide a seal between the male element 3 and body 1.

The pressure of the fluid which passes through the hoses 2 and 4, and which tends to cause the male element 3 to withdraw axially from the body 1, also causes the two engagement members 12 to move rearwards as far as is allowed by the width of the passages 11, so ensuring that the body 1 and male element 3 remain rigidly locked together mechanically by the interposing of the two appendices 15 between the projection 16 on the male element 3 and the conical surface of the passages 11 through the body 1.

To disengage the male element 3 from the body 1 it is necessary only to press lightly on the levers 13 of the two engagement members 12. This causes said members to rotate about their connection edge between the levers 13 and the corresponding rest portion 14, with consequent spacing apart of the appendices 15 until the circumferential projection on the male element 3 can be disengaged and this latter axially withdrawn from the body 1.

After the male element 3 has been thus withdrawn, the two engagement members 12 are released and the elastic reaction of the annular element 18, which is no longer stressed, returns said engagement members into their rest position ready for subsequent insertion of the male element 3.

From the aforegoing it is apparent that the coupling according to the invention offers numerous advantages over conventional couplings, and in particular:

- it is insensitive to accidental impact on falling, as it has no sliding rings which could deform, with resultant jamming in operation. In contrast, the engagement members 12 are always in contact with the body 1 and do not suffer any deformation which could in any way alter their distance from said body;

- it has large areas of contact between the mutually engaged parts, so making such parts practically inderformable even after prolonged periods of operation;

- it provides a rigid, stable mechanical connection between the appendices 15 of the engagement members 12, even if the elastic annular element 18 is absent, the purpose of this latter therefore being essentially to keep said engagement members mounted on the body 1 and to ensure their elastic return after insertion of the male element 3;

- it is constructionally very simple;

- it enables the valve 7, included if the coupling is to be used as a cock, to be of very simple construction as it does not also have to support the balls of conventional coupling when the male element is withdrawn.

In the embodiment shown in figure 4, in the passages 11 are applied two members 26 comprising an appendix 27, a cilindrical portion 28 resting on the body 1 and an appendix 29 for engaging the male element 3. To the cilindrical portion of the body 1 an annular element 30 and a solenoidal spring 31 are applied, the latter elastically keeping the two members 26 in the right operating position. Furthermore to the body 1 a ring 32 is applied, made of two portions having different inner diameter, which rests with one end to the element 30 and is provided at the other end with a circumferential abutment 33. An elastic movable washer 34 housed in a corresponding seat of the body 1 prevents the axial withdrawal of the ring 32.

The operation of the coupling in this second embodiment is as follows:

to fix the male element into the body 1 it is necessary only to push it axially into said body: after the front end of the portion 22 has passed beyond the two appendices 29, the projection 16 takes effect with these and, overcoming the elastic reaction of the spring 31, pushes inside the two engaging members 26. In this way their rotation is allowed, due to the effect of the push of the male element 3, around the edge of the passages next to the spring 31 and their consequent going out from the cilidrical mouth recess of the body to allow the axial insertion of the male element 3 in this one.

After the projection 16 has passed beyond the appendices 29 of the engaging members 26, the elastic reaction of the spring 31 causes said members 26 to return to their original condition and the consequent engagement of said appendices 29 in the circumferential groove of the male element 3 provided between the projection 16 and the rear portion 23.

In order to disengage the male element 3 from the body 1 it is necessary only to exert a light axial displacement of the ring 32 towards the hose 2. In this way the abutment 33 causes a corresponding axial displacement of the engaging members 26 which allow, with their rotation around the edge of the passages next to the spring 31, the axial withdrawal of the male element 3.

After the male 3 has been thus withdrawn, if the ring 32 is released, the elastic reaction of the spring 31 returns the engaging members 26 into their rest position ready for subsequent insertion of the male element 3.

This second embodiment, besides the above described advantages, presents some further ones and in particular:

- presents a stroke of the ring very low to carry out the disengagement of the hose,

- has an operating similar to that of the traditional ball coupling.

## Claims

1. An instant hose coupling, characterised by comprising:

- a body (1) comprising an axial duct provided internally with at least one O-ring (9);

- a male element (3) axially insertable into said body (1) so that a seal is formed between its outer surface and said O-ring (9); and

- at least two engagement members (12,26) applied externally to said body (1) and each comprising an appendix (15,29) which traverses a corresponding passage (11) provided in the body and engages in a circumferential groove provided in said male element (3) on the outside of the portion which seals against said O-ring (9).

2. A coupling as claimed in claim 1, characterised in that at the opposite end to that into which the male element (3) is inserted the body (1) houses a valve (7) urged axially by a spring (6) to adhere to a seal gasket (8) and to thus close the axial duct through said body (1), said valve (7) being displaced axially from said closure position on insertion of said male element (3).

3. A coupling as claimed in claim 1, characterised in that the male element (3) comprises a smaller-diameter portion (22) insertable into the body (1) and a larger-diameter portion (23) fixed to the hose end to be connected.

4. A coupling as claimed in claim 3, characterised in that the portion (22) of the male element (3) insertable into the body (1) comprises a circumferential projection (16) engageable by the appendices (15,29) of the engagement members (12,26).

5. A coupling as claimed in claim 1, characterised in that each engagement member (12) comprises an operating lever (13) positioned at an angle to the body axis.

6. A coupling as claimed in claim 1, characterised in that the engagement members (12) are kept elastically retained on the body (1) by a single elastic ring (18) applied simultaneously with them.

7. A coupling as claimed in claim 6, characterised in that it comprises a rubber annular element (19) encircling the elastic ring (18).

8. A coupling as claimed in claim 1, characterised in that each engagement member (12) is circumferentially in the shape of a wide arc and has those surfaces which make contact with parts of the body (1) and male element (3) shaped in accordance with said parts.

9. A coupling as claimed in claim 1, characterised in that each engagement member (12) is partly housed in a passage (11) and having a width such as to allow it a limited axial freedom of movement.

10. A coupling as claimed in claim 1, characterised in that the front edge of the portion (22) of the male element (3) is flared at an angle substantially equal to that formed by the surface (22) of the appendix (15) which faces that opening of the body (1) through which the male element (3) is inserted.

11. A coupling as claimed in claim 4, characterised in that that surface (24) of the projection (16) on the male element (3) which faces the body (1) is conical with a cone angle substantially equal to the flare angle of that portion of the body (1) with which said projection (16) interferes during its insertion.

12. A coupling according to claim 1 characterised in that it comprises a ring (32) axially movable with respect to the body (1) and suitable to cause the engagement and the disengagement of the members (2) on the male (3).

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 538 964  (REX WILLIAM AUSTIN) <br> * Figures * <br> --- | 1-3,5,6 ,8,9 | F 16 L  37/08 |
| X | CH-A- 583 398  (P. BOILLAT) <br> * Figures * <br> --- | 1,4,5 | |
| A | GB-A- 774 264  (D.W. GORRELL et al.) <br> * Figures * <br> --- | 2-4,8, 11,12 | |
| A | CH-A- 323 097  (C. ANDERMATT) <br> * Figures * <br> ----- | 2,4,10- 12 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 30-06-1988 | BARTSCH A.W. |